# EUROPEAN PATENT APPLICATION

(11) **EP 4 661 398 A1**
(43) Date of publication of application: **10.12.2025**
(21) Application number: 24305889.8
(22) Date of filing: 05.06.2024
(51) Int. Cl.: H04N 19/13, H04N 19/169, H04N 19/91

(54) **METHOD AND APPARATUS FOR ENCODING/DECODING WITH EXPONENTIAL GOLOMB CODING**

(71) Applicant: InterDigital CE Patent Holdings, SAS, 75017 Paris (FR)
(72) Inventor: BOISSON, Guillaume, 35137 PLEUMELEUC (FR); GALPIN, Franck, 35235 THORIGNE-FOUILLARD (FR); BORDES, Philippe, 35890 LAILLE (FR); LEFEBVRE, Frederic, 35000 RENNES (FR)
(74) Representative: Interdigital

(57) **Abstract**

In various implementations, method and devices are disclosed that reduce a coding cost associated with integer values when coded with exponential Golomb. An example method may involve obtaining an integer value. The method may involve obtaining an order of an exponential-Golomb code for coding the integer value that is clipped to the maximum number of bits used by the integer value. The method may involve encoding the integer value with the exponential-Golomb code of the order to generate an encoded integer value. The termination bit of a prefix of the exponential-Golomb code may be skipped on a condition depending on the maximum number of bits used by the integer value.

## Description

### TECHNICAL FIELD

The present embodiments generally relate to a method and an apparatus for video encoding or decoding a set of integer values with exponential Golomb code.

### BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction. To reduce encoding artifacts, in-loop filters, for example deblocking filter, SAO (Sample Adaptive Offset), Adaptive Loop Filter), are applied to the reconstructed picture.

### SUMMARY

In various implementations, methods and devices are disclosed that optimize encoding or decoding a set of integer values with exponential Golomb code.

According to a first aspect, a method of video decoding is disclosed that comprises obtaining coded video data representative of an integer value coded with order-K exp-Golomb. The method may further involve obtaining an order of an exponential-Golomb code for coding the integer value; and responsive to determining that a further bit in a prefix of the exponential-Golomb code for coding the integer value does not satisfy a condition on a bit depth of the integer value, inferring a termination bit of the prefix. Then, the method may involve obtaining one or more bits of a suffix of the exponential-Golomb code for coding the integer value; and decoding the integer value from one or more bits of the prefix, the termination bit of the prefix and the one or more bits of the suffix of the exponential-Golomb code.

According to a second aspect, a method of video encoding is disclosed that comprises obtaining an integer value to encode with exp-Golomb code into video data. The method may involve obtaining an order of an exponential-Golomb code for coding the integer value; obtaining a prefix of the exponential-Golomb code for coding the integer value; outputting one or more bits of the prefix; and responsive to determining that a further output bit in the prefix does not satisfy a condition on a bit depth of the integer value, skipping outputting of a termination bit of the prefix. The method may further involve outputting one or more bits of a suffix of the exponential-Golomb code for coding the integer value; and including, in coded video data, the one or more output bits of the prefix and the one or more output bits of the suffix of the exponential-Golomb code for coding the integer value.

One or more embodiments also provide an apparatus for encoding/decoding video comprising one or more processors and at least one memory coupled to said one or more processors, wherein said one or more processors are configured to perform the encoding method according to any of the embodiments described herein.

One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

### BRIEF DESCRIPTION OF THE DRAWINGS

FIG. 1 illustrates a block diagram of a system within which aspects of the present embodiments may be implemented.
FIG. 2 illustrates a block diagram of an embodiment of a video encoder.
FIG. 3 illustrates a block diagram of an embodiment of a video decoder.
FIG. 4 illustrates a method for encoding or decoding a video according to an embodiment.
FIG. 5 illustrates method for encoding using exponential-Golomb code according to an embodiment.
FIG. 6 illustrates method for decoding using exponential-Golomb code according to an embodiment.

### DETAILED DESCRIPTION

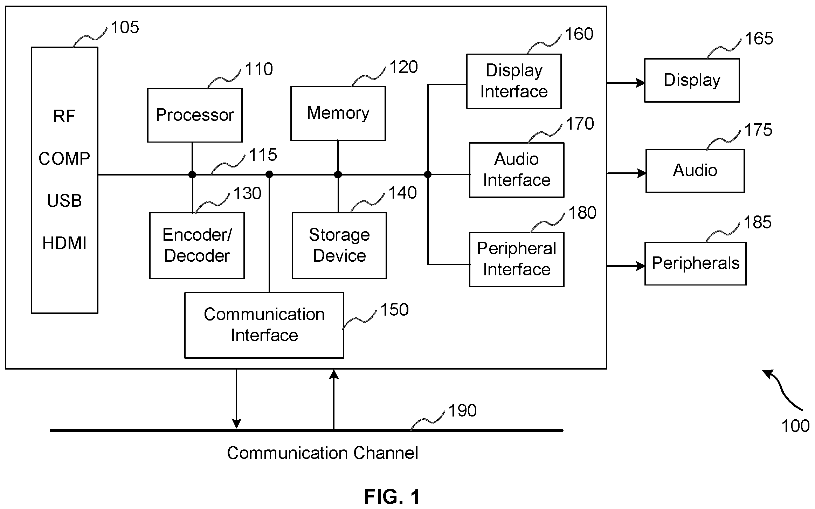

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

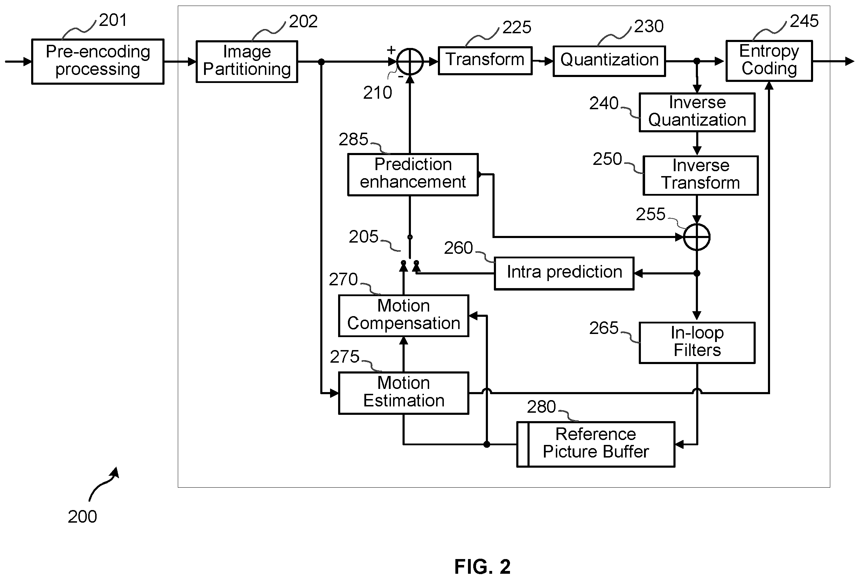

FIG. 2 illustrates an example video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression. Metadata can be associated with the pre-processing, and attached to the bitstream (for example in the form of supplemental enhancement information (SEI) messages, for AVC, HEVC, and VVC standards).

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. After prediction, prediction enhancement (285) is applied to the prediction block. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

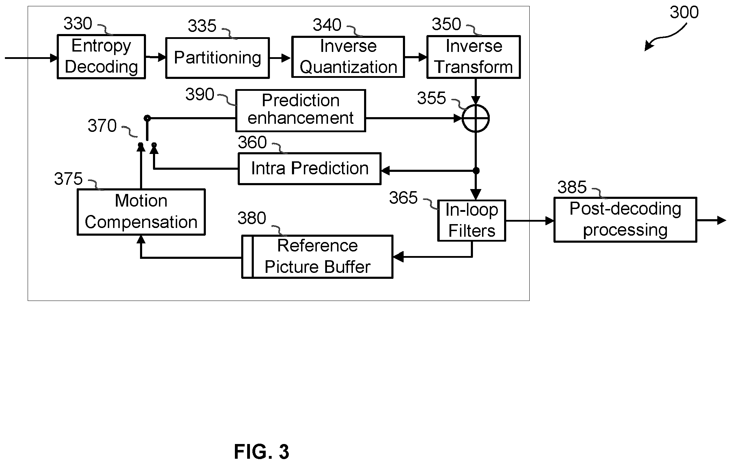

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). After prediction, prediction enhancement (390) is applied to the prediction block. In-loop filters (365) are applied to the reconstructed image. The filtered image is stored at a reference picture buffer (380).

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

Recent additions to video compression technology include various industry standards, versions of the reference software and/or documentations such as Enhanced Compression Model (ECM) being developed by the JVET (Joint Video Exploration Team) group. The aim is to make further improvements to the existing VVC (Versatile Video Coding) standard and VSEI specification.

Feature(s) associated with exponential Golomb are provided herein.

An exponential Golomb (exp-Golomb) coding may be used to code a set of integer values, for example the values of the residual coefficients or the values of filters coefficients, such as the values of ALF filters coefficients. The coding of the residual coefficients of a transform unit may use a combination of Context-Adaptive Binary Arithmetic Coding (CABAC) and exponential Golomb (exp-Golomb) coding. Part of the absolute value of the coefficient is coded using a series of CABAC bins denoting if the coefficient is zero, greater than 1, greater than 2 etc. Then, if the coefficient is still greater than the maximum value encoded with the CABAC part, an exp-Golomb coding is applied on the remainder.

An exponential-Golomb code (exp-Golomb) is a type of universal code. To encode any non-negative integer x using the exp-Golomb code:
1. Write down x+1 in binary
2. Count the bits written, subtract one, and write that number of starting zero bits preceding the previous bit string.

For order-k exp-Golomb, to encode a non-negative integer x in an order-k exp-Golomb code:
1. Encode [x/2k] using order-0 exp-Golomb code described above
2. Encode x mod 2k in binary

An example of exponential-Golomb code (exp-Golomb) for non-negative integer values in the range [0-9] with various k-order is presented in the table below:

| **x** | **K=0** | **K=1** | **K=2** | **K=3** |
|---|---|---|---|---|
| 0 | 1 | 1 0 | 1 0 0 | 1 0 0 0 |
| 1 | 0 1 0 | 1 1 | 1 0 1 | 1 0 0 1 |
| 2 | 0 1 1 | 0 1 0 0 | 1 1 0 | 1 0 1 0 |
| 3 | 0 0 1 0 0 | 0 1 0 1 | 1 1 1 | 1 0 1 1 |
| 4 | 0 0 1 0 1 | 0 1 1 0 | 0 1 0 0 0 | 1 1 0 0 |
| 5 | 0 0 1 1 0 | 0 1 1 1 | 0 1 0 0 1 | 1 1 0 1 |
| 6 | 0 0 1 1 1 | 0 0 1 0 0 0 | 0 1 0 1 0 | 1 1 1 0 |
| 7 | 0 0 0 1 0 0 0 | 0 0 1 0 0 1 | 0 1 0 1 1 | 1 1 1 1 |
| 8 | 0 0 0 1 0 0 1 | 0 0 1 0 1 0 | 0 1 1 0 0 | 0 1 0 0 0 0 |
| 9 | 0 0 0 1 0 1 0 | 0 0 1 0 1 1 | 0 1 1 0 1 | 0 1 0 0 0 1 |
| ... | ... | ... | ... | ... |

However, signed and unsigned integers may be encoded using an order-k exp-Golomb. An example of pseudo code for encoding with Exp-Golomb is as follows:

```
       golombEncode(int value, int k, bool signed)
       {
        unsigned int symbol = abs(value);
        while (symbol >= (unsigned int)(1 << k)) {
          symbol -= 1 << k;
          k+= 1;
          WRITE_FLAG(0); // prefix }
        WRITE_FLAG(1); // prefix
        if (k > 0)
        {
          WRITE_CODE(symbol, k); // suffix }
        if (signed && (value != 0))
        {
          WRITE_FLAG((value < 0) ? 1 : 0; // sign }
       }
```

Here the variable 'value' denotes the integer to be encoded, k denotes the exponential-Golomb order, and 'signed' denotes a Boolean parameter that indicates whether the integer is signed or not. The function WRITE_FLAG() writes a binary flag in the bitstream, '0' or '1', while the function WRITE_CODE() writes a non-negative integer on a given number of bits (provided as the second argument, for instance k). Such Exp-Golomb encoding method may be used in VVC encoders.

Besides, VVC specification describes how signed and unsigned integer values are decoded using an order-k exp-Golomb. This process may be invoked when the descriptor of a syntax element in the syntax tables is equal to an unsigned value ue(v) or a signed value se(v). Outputs of this process are syntax element values. Syntax elements as ue(v) or se(v) are exp-Golomb-coded with exp-Golomb order k equal to 0. The parsing process for these syntax elements begins with reading the bits starting at the current location in the bitstream up to and including the first non-zero bit, and counting the number of leading bits numLeadingBits that are equal to 0. An example of pseudo code for decoding with Exp-Golomb is as follows:

```
       golombDecode(int k, bool signed)
       {
        while (b==0) {
          READ_FLAG(b); // prefix
          numLeadingBits += 1 }
        int symbol = ((1 << numLeadingBits) - 1) « k;
        if (numLeadingBits + k > 0) {
          uint32_t bins;
          READ_CODE(numLeadingBits + k, bins) // suffix
         symbol += bins; }
        if (signed && (symbol != 0)) {
          READ_FLAG(b) // sign
         symbol = (b==1) ? -symbol : symbol;
        }
        return symbol; }
```

Here, the variable 'symbol' denotes the returned decoded integer value, k denotes the exponential-Golomb order, and 'signed' denotes a Boolean parameter that indicates whether the encoded integer is signed or not. The function READ_FLAG() reads a binary flag in the bitstream, '0' or '1', while the function READ_CODE() reads a non-negative integer on a given number of bits (provided as first argument).

Besides, Table 48 of VVC specification illustrates the structure of the order-0 exp-Golomb code by separating the bit string into "prefix" and "suffix" bits. The "prefix" bits are those bits that are parsed for the computation of numLeadingBits and are shown as either 0 or 1 in the bit string column of Table 48. The "suffix" bits are those bits that are parsed in the computation of codeNum and are shown as xᵢ in Table 48, with i in the range of 0 to numLeadingBits - 1, inclusive. Each xᵢ is equal to either 0 or 1.

**Table 48 - Bit strings with "prefix" and "suffix" bits and assignment to codeNum ranges (informative)**

| **Bit string form** | **Range of codeNum** |
|---|---|
| 1 | 0 |
| 0 1 x₀ | 1..2 |
| 0 0 1 x₁ x₀ | 3..6 |
| 0 0 0 1 x₂ x₁ x₀ | 7..14 |
| 0 0 0 0 1 x₃ x₂ x₁ x₀ | 15..30 |
| 0 0 0 0 0 1 x₄ x₃ x₂ x₁ x₀ | 31..62 |
| ... | ... |

Table 49 illustrates explicitly the assignment of bit strings to codeNum values.

**Table 49 - Exp-Golomb bit strings and codeNum in explicit form and used as ue(v) (informative)**

| **Bit string** | **codeNum** |
|---|---|
| 1 | 0 |
| 0 1 0 | 1 |
| 0 1 1 | 2 |
| 0 0 1 0 0 | 3 |
| 0 0 1 0 1 | 4 |
| 0 0 1 1 0 | 5 |
| 0 0 1 1 1 | 6 |
| 0 0 0 1 0 0 0 | 7 |
| 0 0 0 1 0 0 1 | 8 |
| 0 0 0 1 0 1 0 | 9 |
| ... | ... |

To reduce the coding cost of integer values (e.g., syntax element or residual), it is proposed to modify exp-Golomb coding when a constraint relative to the highest absolute integer value is known by both the encoding and decoding method. According to a particular feature, a constraint may be the bit depth used for representing the absolute value of the integers, that is the maximum number of bits used to represent the integer values with a binary number (ie power of 2). Alternatively, a constraint may be referred to as a precision information, provided as a number of bits on which the values may be binary coded. For instance, in ECM, the number of bits used to encode a coefficient is signaled in the APS using the syntax element alt_luma_bits. The value is for example in the range [5-8] bits (+1 bit for the sign). The number of bits may also be fixed (for example for the chroma filters). For example, the number of bits may be set to the value 8. According to another example, the bit depth of the samples of the luma and chroma components is signaled in the Sequence parameter set SPS. The value is for example in the range [8-16] bits (+1 bit for the sign), and typically 10. According to yet another example, depending on range extension semantics, an extended dynamic range may used for transform coefficients in the scaling and transformation processes and for binarization of the residual coefficients and is signaled through a precision information. In the following the term bit depth or maximum number of bits used by the integer value will be used indifferently.

Accordingly, the present document proposes to determine an optimized order of an exponential-Golomb code for coding a current integer value in a set of integer values and to perform prefix shortening for exponential-Golomb coding.

According to a first embodiment, the exp-Golomb order is updated with the value of the bit depth in case where the order-k of exp-Golomb is higher than the bit depth value.

According to a second embodiment, the termination bit of the prefix is skipped in case where a condition on the length of the prefix and the bit depth value is satisfied.

Various embodiments are described in the following that may be used in combination or independently.

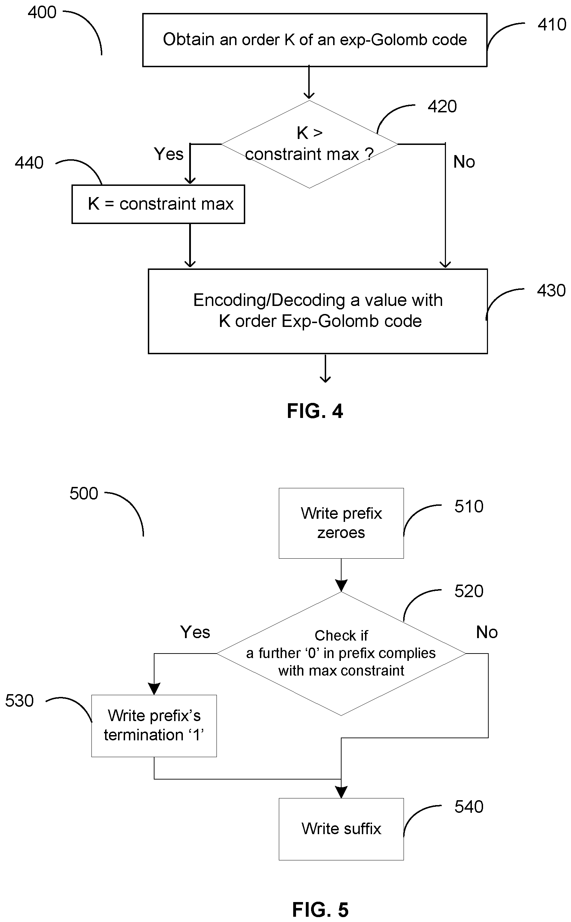

According to a first embodiment, the exp-Golomb order k is updated with the value of the bit depth in case where the order-k of exp-Golomb is higher than the bit depth value. Sometimes the encoder takes questionable decisions. For instance, for a given ALF filter, the encoder may choose an exp-Golomb order LUT based on a global RD criterion on the whole filter, yet among the many orders of that LUT, some orders may be larger than the bit depth of the filter. In that case, it is desirable to optimize the exp-Golomb coding to reduce the number of bits whenever possible. FIG. 4 illustrates a method for encoding/decoding a video according to an embodiment. The method 400 of FIG. 4 may be implemented in an encoder of FIG. 2 or a decoder of FIG. 3. For instance, the method of FIG. 4 comprises encoding or decoding 430 an integer value among a set of values with K order Exp-Golomb code. For instance, the set of N coefficient values may be the ALF coefficients of a filter or may be the transformed and quantized residual coefficients in a transformed unit. More generally, any set of integer values where the dynamic range of the integer values is known inside the set may be processed. According to a preliminary step of the encoding method not shown on FIG. 4, the integer value to encode is obtained, such as the remainder of the CABAC coded transformed and quantized residual coefficients to code with an order-k Exp-Golomb. In a step 410, an order k of exp-Golomb code is obtained. In a step 420, the order k of an exponential-Golomb code for coding the integer value is compared with the maximum number of bits used by the integer value (or bit depth). In response to determining (YES) that the order of an exponential-Golomb code for coding the integer value is larger than a maximum number of bits used by the integer value, the order of an exponential-Golomb code is updated 440 to the maximum number of bits used by the integer value. Indeed, if the bit depth (or precision) is strictly lower than the exponential-Golomb order, then that order value is too large and may lead to unnecessary digits. Therefore, the exponential-Golomb order is updated with the value of the bit depth (or precision). For instance, referring to the exemplary values of the first table, it is pointless to encode a single flag (bitdepth=1) with an exp-Golomb order greater or equal to 2 (see columns K=2). Similarly, considering a 2-bits value (00=0, 01=1, 10=2, 11=3), it is pointless to encode it with an exp-Golomb order greater or equal to 3 (see columns K=3). In both cases, bits would be wasted in the suffix. Thus, by comparing the order-K with the bith-depth of the coded value, the method advantageously allows saving coded bits while encoding or decoding with exp-Golomb 430.

Then, as to the encoding/decoding 430 with exp-Golomb for instance with order-0, the order-0 exp-Golomb code comprises a bit string separated into "prefix" and "suffix" bits. The "prefix" bits are those bits that are parsed for the computation of numLeadingBits, before the read of the termination bit '1'. In the variant where a unitary code is used, the prefix bits are set to '1' while the termination bit is '0'.

According to a second embodiment, the termination bit of the prefix is skipped in case where a condition on the length of the prefix and the bit depth value is satisfied.

For instance, instead of using the standard exp-Golomb coding, the prefix is coded using the knowledge of the maximum number of bits (bit depth) used by an integer value in the set of values and the current state of the encoding/decoding. FIG. 5 illustrates method for exp-Golomb encoding according to an embodiment. The method 500 of FIG. 5 may be implemented in an encoder of FIG. 2. The method 500 of FIG. 5 may be combined with the method of FIG. 4 and implemented in the encoding step 430 of FIG.4. As previously explained for the regular Exp-Golomb, a prefix and a suffix of the exponential-Golomb code for coding the integer value are obtained. In a step 510, the prefix zeroes are written to the bitstream, that is one or more bits (ie non-termination bits being '0' or '1' depending on whether the code is or not unitary) of the prefix are output. Then, in a step 520, while encoding the terminal prefix '1' bit, it is check if a further '0' in the prefix would comply with the enforced bit depth (precision) constraint. If it does (YES), then the final '1' is considered as meaningful and necessary, and it is written 530. Stated differently, the termination bit of the prefix is output in the bitstream to form video data. If not (NO), the final '1' of the prefix is skipped and the method goes to step 540 in which the bits of the suffix are written in the bitstream. That is, the one or more bits of the suffix of the exponential-Golomb code for coding the integer value is output in the bitstream to form video data.

At encoder side, the encoding process for unsigned integers can be implemented using the following method:

```
       encode_maxGolomb(value, k, k_max)
       {
          k_init = k
          if (k > k_max ) {
            k = k max
          }
          k_init = k
          nb_leading_bits = 0
          while (value >= (1 << k)) {
            value -= (1 << k)
            k += 1
            WRITE_FLAG(0) // prefix
            nb_leading_bits += 1
          }
          next_prefix_value = ((1 << (nb_leading_bits+1)) - 1) << k init
          if (next_prefix value < (1 << k_max)) {
            WRITE_FLAG(1) // prefix }
          if (k > 0) {
            WRITE_CODE(value, k) // suffix }
```

Here the variable 'value' denotes the integer to be encoded, k denotes the exponential-Golomb order, and k_max denotes the bit depth (precision) constraint. The function WRITE_FLAG() writes a binary flag in the bitstream, '0' or '1', while the function WRITE_CODE() writes a non-negative integer on a given number of bits (provided as the second argument). As shown in the pseudo code, the condition on a bit depth of the integer value that a further output bit next_prefix_value being equal to ((1 << (nb_leading_bits+1)) - 1) << k init in the prefix does need to satisfy to output a termination bit is next_prefix_value < (1 << k_max).

The addition of the sign-bit is straightforward, that it is coded separately, right after the absolute value as explained with the regular exp-Golomb encoding method.

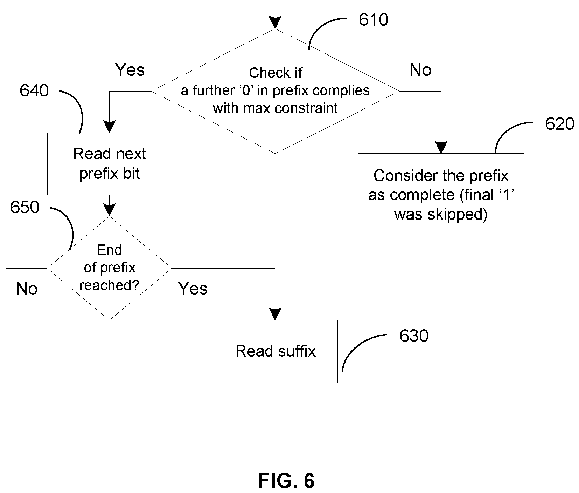

FIG. 6 illustrates method for Exp-Golomb decoding according to an embodiment. The method 600 of FIG. 6 may be implemented in the decoder of FIG. 3. The method 600 of FIG. 6 may be combined with the method of FIG. 4 and implemented in the decoding step 430 of FIG.4. Thus, while decoding the prefix, it is monitored whether a further '0' bit in the prefix would comply with the enforced bit depth (precision) constraint. If it does, then a further prefix bit. If not, next prefix bit is skipped and assumed to be equal to 1. Accordingly, in a step not represented on FIG. 6, coded video data (ie bitstream) representative of an integer value is obtained. Then, responsive to determining 610 that a further bit in a prefix of the exponential-Golomb code for coding the integer value does not satisfy a condition on a bit depth of the integer value, in a step 620 a termination bit of the prefix is inferred and then the method goes to step 630 where one or more bits of a suffix of the exponential-Golomb code for coding the integer value are obtained. Otherwise, if a further bit in a prefix of the exponential-Golomb code for coding the integer value satisfies a condition on a bit depth of the integer value, in a step 640, a further bit of a suffix is obtained until 650 a termination bit of the prefix is obtained. Then, the integer value is reconstructed from the one or more bits of the prefix, the termination bit and the one or more bits of the suffix of the exponential-Golomb code.

At decoder side, the decoding process for unsigned integers can be implemented using the following method:

```
       decode_maxGolomb(k, k_max)
       { if (k > k_max ) {
            k = k max
          }
          nb_leading_bits = -1
          b = 0
          while (b==0) {
            next_prefix_value = ((1 << (nb_leading_bits+2)) - 1) << k
            if (next_prefix_value < (1 << k_max)) {
               READ_FLAG(b)
            } else {
              b = 1
            }
            nb_leading_bits += 1 }
          value = ((1 << nb_leading_bits) - 1) << k
          if (nb_leading_bits + k > 0) {
            READ_CODE(nb_leading_bits + k, code)
            value += code
          }
          return value
       }
```

Here the variable 'value' denotes the returned decoded integer, k denotes the exponential-Golomb order, and and k_max denotes the bit depth (precision) constraint. The function READ_FLAG() reads a binary flag in the bitstream, '0' or '1', while the function READ_CODE() reads a non-negative integer on a given number of bits (provided as first argument). As previously, the condition on a bit depth of the integer value that a further output bit next_prefix_value being equal to ((1 << (nb_leading_bits+1)) -1 ) << k_init in the prefix does need to satisfy to output a termination bit is next_prefix_value < (1 << k_max).

The addition of the sign-bit is processed as previously described.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the motion compensation module (270) of a video encoder 200 as shown in FIG. 2. Moreover, the present aspects are not limited to ECM and VVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Note that the syntax elements as used herein are descriptive terms. As such, they do not preclude the use of other syntax element names.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

## Claims

1. A method for video encoding, the method comprising:
obtaining an integer value;
obtaining (410) an order of an exponential-Golomb code for coding the integer value;
obtaining a prefix of the exponential-Golomb code for coding the integer value;
outputting (510) one or more bits of the prefix;
responsive to determining (520) that a further output bit in the prefix does not satisfy a condition on a bit depth of the integer value, skipping outputting of a termination bit of the prefix;
outputting (540) one or more bits of a suffix of the exponential-Golomb code for coding the integer value; and
including, in coded video data, the one or more output bits of the prefix and the one or more output bits of the suffix of the exponential-Golomb code for coding the integer value.

2. The method of claim 1, further comprising responsive to determining (420) that the order of an exponential-Golomb code for coding the integer value is larger than the bit depth of the integer value, updating the order of an exponential-Golomb code to the bit depth of the integer value.

3. The method of claim 1, further comprising responsive to determining (520) that a further output bit in the prefix satisfies a condition on a bit depth of the integer value, outputting (530) a termination bit of the prefix.

4. A method for video decoding, the method comprising:
obtaining coded video data representative of an integer value;
obtaining (410) an order of an exponential-Golomb code for coding the integer value;
responsive to determining (610) that a further bit in a prefix of the exponential-Golomb code for coding the integer value does not satisfy a condition on a bit depth of the integer value, inferring (620) a termination bit of the prefix;
obtaining (630) one or more bits of a suffix of the exponential-Golomb code for coding the integer value; and
decoding the integer value from one or more bits of the prefix and the one or more bits of the suffix of the exponential-Golomb code.

5. The method of claim 4, further comprising responsive to determining (420) that the order of an exponential-Golomb code for coding the integer value is larger than the bit depth of the integer value, updating the order of an exponential-Golomb code to the bit depth of the integer value.

6. The method of claim 4, further comprising responsive to determining (610) that a further bit in a prefix of the exponential-Golomb code for coding the integer value satisfies a condition on a bit depth of the integer value, obtaining (640) a further bit of a suffix of the exponential-Golomb code for coding the integer value until a termination bit of the prefix is obtained.

7. An apparatus, comprising one or more processors, wherein the one or more processors are configured to:
obtain an integer value;
obtain (410) an order of an exponential-Golomb code for coding the integer value;
obtain a prefix of the exponential-Golomb code for coding the integer value;
output (510) one or more bits of the prefix;
responsive to determining (520) that a further output bit in the prefix does not satisfy a condition on a bit depth of the integer value, skip outputting of a termination bit of the prefix;
output (540) one or more bits of a suffix of the exponential-Golomb code for coding the integer value; and
include, in coded video data, the one or more output bits of the prefix and the one or more output bits of the suffix of the exponential-Golomb code for coding the integer value.

8. The apparatus of claim 7, wherein responsive to determining (420) that the order of an exponential-Golomb code for coding the integer value is larger than the bit depth of the integer value, the one or more processors are configured to update the order of an exponential-Golomb code to the bit depth of the integer value.

9. The apparatus of claim 7, wherein responsive to determining (520) that a further output bit in the prefix satisfies a condition on a bit depth of the integer value, the one or more processors are configured to output (530) a termination bit of the prefix..

10. An apparatus, comprising one or more processors, wherein the one or more processors are configured to:
obtain coded video data representative of an integer value;
obtain (410) an order of an exponential-Golomb code for coding the integer value;
responsive to determining (610) that a further bit in a prefix of the exponential-Golomb code for coding the integer value does not satisfy a condition on a bit depth of the integer value, infer (620) a termination bit of the prefix;
obtain (630) one or more bits of a suffix of the exponential-Golomb code for coding the integer value; and
decode the integer value from one or more bits of the prefix, the termination bit of the prefix and the one or more bits of the suffix of the exponential-Golomb code.

11. The apparatus of claim 10, wherein responsive to determining (420) that the order of an exponential-Golomb code for coding the integer value is larger than the bit depth of the integer value, the one or more processors are configured to update the order of an exponential-Golomb code to the bit depth of the integer value.

12. The apparatus of claim 10, wherein responsive to determining (610) that a further bit in a prefix of the exponential-Golomb code for coding the integer value satisfies a condition on a bit depth of the integer value, the one or more processors are configured to obtain (640) a further bit of a suffix of the exponential-Golomb code for coding the integer value until a termination bit of the prefix is obtained.

13. A computer readable storage medium having stored thereon instructions for video encoding according to the method of any one of claims 1-3.

14. A computer readable storage medium having stored thereon instructions for video decoding according to the method of any one of claims 4-6
